(19) Europäisches Patentamt / European Patent Office / Office européen des brevets

(11) **EP 2 053 281 A2**

(12) **EUROPEAN PATENT APPLICATION**

(43) Date of publication:
**29.04.2009 Bulletin 2009/18**

(51) Int Cl.:
**F16H 61/662** (2006.01)

(21) Application number: **08167406.1**

(22) Date of filing: **23.10.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **24.10.2007 JP 2007276335**<br><br>(71) Applicant: **Toyota Jidosha Kabushiki Kaisha Toyota-shi, Aichi 471-8571 (JP)** | (72) Inventors:<br>• **Fujiwara, Hiroya**<br>  **Toyota-shi Aichi 471-8571 (JP)**<br>• **Toyoda, Shinya**<br>  **Toyota-shi Aichi 471-8571 (JP)**<br>• **Hino, Akira**<br>  **Toyota-shi Aichi 471-8571 (JP)**<br><br>(74) Representative: **TBK-Patent**<br>  **Bavariaring 4-6**<br>  **80336 München (DE)** |

(54) **Vehicle control apparatus**

(57)     When acceleration has been judged from the amount of operation of an accelerator pedal, linear shift control is executed by determining acceleration target revolutions ninline using vehicle speed at the time of that acceleration judgment as a starting point (ST1 to ST3). After the acceleration judgment, when a kick-down switch is set to ON, the vehicle speed at which the acceleration target revolutions are determined is re-read, and linear shift control is executed by determining the acceleration target revolutions ninline using vehicle speed when the kick-down switch is ON as a starting point (ST4 to ST5). By re-reading the starting point where the acceleration target revolutions are determined when the kick-down switch is ON in this manner, it is possible to always control the attained revolutions when the kick-down switch is set to ON to an optimal number of revolutions (maximum output revolutions), and thus it is possible to improve drivability.

FIG.8

START

ST1 — xkasoku = ON — NO

YES

ST2 — determine ninline using vehicle speed at the time of acceleration judgment as starting point

ST3 — execute linear shift control

ST4 — K/Dsw = ON — NO

YES

ST5 — determine ninline using vehicle speed when K/Dsw·ON as starting point

ST6 — execute linear shift control

ST7 — K/Dsw = OFF — NO

YES

ST8 — determine ninline without changing starting point

ST9 — execute linear shift control

ST10 — xkasoku = OFF — NO

YES

RETURN

**Description**

TECHNICAL FIELD

The present invention relates to a control apparatus of a vehicle equipped with a continuously variable transmission.

BACKGROUND ART

In a vehicle equipped with an engine, as transmissions that appropriately transmit torque and rotational speed produced by the engine to drive wheels according to the running state of the vehicle, automatic transmissions are known that automatically set an optimum gear ratio between the engine and the drive wheels.

Examples of automatic transmissions provided in a vehicle include planetary gear-type transmissions that set the gear ratio using a planetary gear apparatus and friction-engaging elements such as a clutch and a brake, and belt-driven continuously variable transmissions that continuously adjust the gear ratio.

In a belt-driven continuously variable transmission, a belt is wrapped around a primary pulley provided with a pulley groove (V groove) and a secondary pulley (output-side pulley). At the same time that the groove width of the pulley groove of one pulley expands, the groove width of the pulley groove of the other pulley narrows, and thus the belt contact radius (effective diameter) of the belt relative to each pulley is continuously varied to continuously set the gear ratio. The torque transmitted in this belt-driven continuously variable transmission depends on the load that acts in the direction that the belt and the pulleys contact each other, and thus the belt is clamped by the pulleys such that the belt is given tension.

Also, gear shifting of the belt-driven continuously variable transmission is performed by enlarging or reducing the groove width of the pulley groove. Specifically, the primary pulley and the secondary pulley are respectively configured with a fixed sieve and a movable sieve, and the movable sieve is moved to the front or rear in the axial direction by a hydraulic actuator provided on the back face side of the movable sieve, thus shifting gears.

In this way, in a belt-driven continuously variable transmission, along with clamping the belt with the pulleys in order to give tension to the belt, the clamping state of the belt by the pulleys is changed in order to execute a gear shift. Therefore, in the secondary pulley-side hydraulic actuator, a necessary transmitted torque capacity is insured by supplying oil pressure according to the demanded torque, represented by engine load or the like, and in the primary pulley-side hydraulic actuator, by supplying oil pressure in order to perform a gear shift, the groove width of the secondary pulley is changed at the same time as the groove width of the primary pulley is changed.

In a vehicle equipped with such a continuously variable transmission, for example, target revolutions nint of an input side are calculated from a map that has been set in advance and uses vehicle speed and an accelerator operation amount (accelerator opening degree) that expresses the amount of output demanded by the driver as parameters, and by controlling the primary pulley-side hydraulic actuator of the continuously variable transmission such that actual input shaft revolutions nin match the target revolutions nint, the gear ratio is automatically set.

Incidentally, the map used for gear ratio control of the continuously variable transmission, ordinarily, is set such that fuel consumption becomes optimal according to the vehicle speed and accelerator opening degree, and by using this map, it is possible to always set a gear ratio with optimal fuel consumption. However, if the gear ratio of the continuously variable transmission is controlled with importance always given to fuel consumption, there may be cases in which when the driver depresses the accelerator pedal to accelerate, response to the accelerator operation is poor, and thus the feeling of acceleration demanded by the driver cannot be adequately obtained.

With the object of addressing such points, technology has been proposed whereby it is possible to adequately obtain a feeling of acceleration for an acceleration operation by the driver in a vehicle equipped with a continuously variable transmission (see JP 2006-051842A, and JP 2005-163959A).

With this proposed technology, when acceleration is demanded by an accelerator pedal operation of the driver, acceleration target revolutions ninline are calculated that are higher than the ordinary target revolutions used during ordinary operation of the accelerator pedal, and increases at a predetermined slope in proportion to the increase in vehicle speed, and by performing feedback control of the input shaft revolutions nin such that the deviation between the calculated acceleration target revolutions ninline and the actual input shaft revolutions nin falls within a predetermined range, an adequate feeling of acceleration for an acceleration operation by the driver is obtained (this control during acceleration is referred to as "linear shift control). In this sort of linear shift control, the acceleration target revolutions ninline are determined using the vehicle speed when acceleration is demanded (when acceleration is judged) as a starting point.

In a vehicle equipped with a continuously variable transmission, when the driver depresses the accelerator pedal greatly and thus a kick-down operation is performed, a downshift is executed in which the gear ratio of the continuously variable transmission is set to a gear ratio at which maximum driving power is obtained. A determination of whether or not a kick-down operation has been performed is made using a kick-down switch (referred to below as K/Dsw) that is installed near full throttle of the accelerator pedal, and switches to ON when the accelerator pedal has been depressed to at least a predetermined opening degree.

Incidentally, a kick-down operation is performed in order to improve acceleration performance by downshifting the continuously variable transmission, but with a conventional linear shift control, such a kick-down operation (kick-down switch ON) is not considered, so even if the kick-down switch is set to ON during linear shift control, the preceding linear shift control continues. Therefore, there may be instances in which the attained revolutions when the kick-down switch is ON do not reach the optimal number of revolutions (maximum output revolutions), and there may be instances in which acceleration performance is not obtained during kick-down operation. Also, there may be instances in which the attained revolutions exceed the optimal number of revolutions when there is a large amount of increase in the target revolutions at the point in time that the kick-down switch is set to ON. In this case, in a range of low vehicle speed or the like, the number of revolutions may become too high, so that vibration or noise occurs.

SUMMARY OF THE INVENTION

The present invention was made in consideration of such circumstances, and it is an object thereof to realize, in a vehicle control apparatus that executes linear shift control, a control that is capable of insuring drivability during a kick-down operation.

The present invention presumes a vehicle control apparatus that is applied to a vehicle equipped with a continuously variable transmission, and includes an acceleration judging means that judges acceleration from the amount of operation of an accelerator pedal, and a linear shift control means that, when acceleration has been judged with the acceleration judging means, based on acceleration target revolutions that are greater than normal target revolutions used during normal operation of the accelerator pedal, controls the continuously variable transmission. In this sort of vehicle control apparatus, a kick-down switch is provided that detects that the accelerator pedal has been depressed to a kick-down position, and the linear shift control means executes linear shift control by determining the acceleration target revolutions based on running conditions of the vehicle when acceleration is judged, and when the kick-down switch is set to ON, re-reads the conditions whereby the acceleration target revolutions are determined.

As a specific configuration of the above linear shift control means, it is possible to cite a configuration in which the linear shift control means executes linear shift control by determining the acceleration target revolutions using the vehicle speed when acceleration is judged as a starting point, and when the kick-down switch is set to ON, re-reads the starting point for determining the acceleration target revolutions, and executes linear shift control by determining the acceleration target revolutions using the vehicle speed when the kick-down switch was set to ON as a starting point. More specifically, it is possible to cite a configuration in which the linear shift control means determines the acceleration target revolutions by obtaining a base target revolutions and an accelerator opening degree correction amount using the vehicle speed when acceleration is judged as a starting point, and when the kick-down switch is set to ON, determines the acceleration target revolutions by obtaining the base target revolutions and the accelerator opening degree correction amount using the vehicle speed when the kick-down switch was set to ON as a starting point.

According to the present invention, with a process in which linear shift control is executed by determining the acceleration target revolutions based on running conditions of the vehicle when acceleration is judged, and when the kick-down switch is set to ON, the conditions whereby the acceleration target revolutions are determined are re-read, the acceleration target revolutions used for linear shift control when the kick-down switch was set to ON are set independently, so it is possible to set acceleration target revolutions suitable for a kick-down operation, and so it is possible to always control the attained revolutions when the kick-down switch is set to ON to an optimal number of revolutions (maximum output revolutions). Thus, it is possible to obtain good acceleration performance during a kick-down operation. Also, it is possible to suppress the attained revolutions when the kick-down switch is set to ON from becoming greater than the optimal revolutions, so it is possible to suppress vibration and noise in the range of low vehicle speed or the like. As a result, it is possible to achieve an improvement in drivability during a kick-down operation.

In the present invention, a configuration may be adopted in which when a vehicle speed change correction amount (revolutions correction amount for vehicle speed change) is reflected in the acceleration target revolutions during linear shift control, the vehicle speed change correction amount is set using the vehicle speed when acceleration is judged as a starting point, and when the kick-down switch is set to ON, the vehicle speed change correction amount is set using the vehicle speed when the kick-down switch was set to ON as a starting point, and with this processing, the vehicle speed change correction amount used for linear shift control while the kick-down switch is set to ON is set independently. When the vehicle speed change correction amount is reflected in this manner, it is possible to match the revolutions after the attained revolutions when the kick-down switch is ON have reached the optimal revolutions to a change in the optimal revolutions, and thus it is possible to further improve drivability during a kick-down operation.

In the present invention, a configuration may be adopted in which when the kick-down switch has been set to OFF after being set to ON, the acceleration target revolutions are determined by maintaining the conditions when the kick-down switch was set to ON, without renewing the conditions in which the acceleration target revolutions are determined. More specifically, a configuration may be adopted in which when the kick-down switch has been set to ON, the acceleration target revolutions are determined using the vehicle speed when the kick-down switch was set to ON as a starting point, and when the kick-down switch has been set to OFF after being set to ON, the starting point for determining the acceleration target revolutions is maintained, so that the acceleration target revolutions are determined using the vehicle speed when the kick-down switch was set to ON as a starting point. By adopting such a configuration, it is possible to suppress a sudden change (sudden drop) in revolutions when the kick-down switch is OFF, and so it is possible to prevent a decrease in drivability when the kick-down switch is off.

According to the present invention, when acceleration has been judged from the amount of operation of the accelerator pedal, linear shift control is executed by determining the acceleration target revolutions based on running conditions of the vehicle when acceleration was judged, and when the kick-down switch is set to ON after acceleration judgment, the conditions whereby the acceleration target revolutions are determined are re-read, and linear shift control is executed by setting acceleration target revolutions appropriate for kick-down operation, so it is possible to always control the attained revolutions when the kick-down switch is set to ON to an optimal number of revolutions, and thus it is possible to improve drivability during kick-down operation.

BRIEF DESCRIPTION OF THE DRAWINGS

FIG. 1 is a schematic configuration view that shows an example of a vehicle in which the present invention is applied.

FIG. 2 is circuit configuration view of a hydraulic control circuit that controls a hydraulic actuator of a primary pulley of a belt-driven continuously variable transmission.

FIG. 3 is a circuit configuration view of a hydraulic control circuit that controls clamping pressure of a belt of the belt-driven continuously variable transmission.

FIG. 4 is a block diagram that shows the configuration of a control system of an ECU and the like.

FIG. 5 shows an example of a map used for gear shift control of the belt-driven continuously variable transmission.

FIG. 6 shows an example of a map used to calculate base target revolutions and an accelerator opening degree correction amount.

FIG. 7 shows an example of a map used to calculate a vehicle speed change correction amount.

FIG. 8 is a flowchart that shows an example of linear shift control.

FIG. 9 is a timing chart that shows an example of linear shift control.

FIG. 10 is a graph that shows change in revolutions when acceleration is determined and when a kick-down switch is ON.

FIG. 11 is a timing chart that shows an example of a conventional linear shift control.

BEST MODE FOR CARRYING OUT THE INVENTION

Hereinafter, embodiments of the present invention will be described with reference to the accompanying drawings.

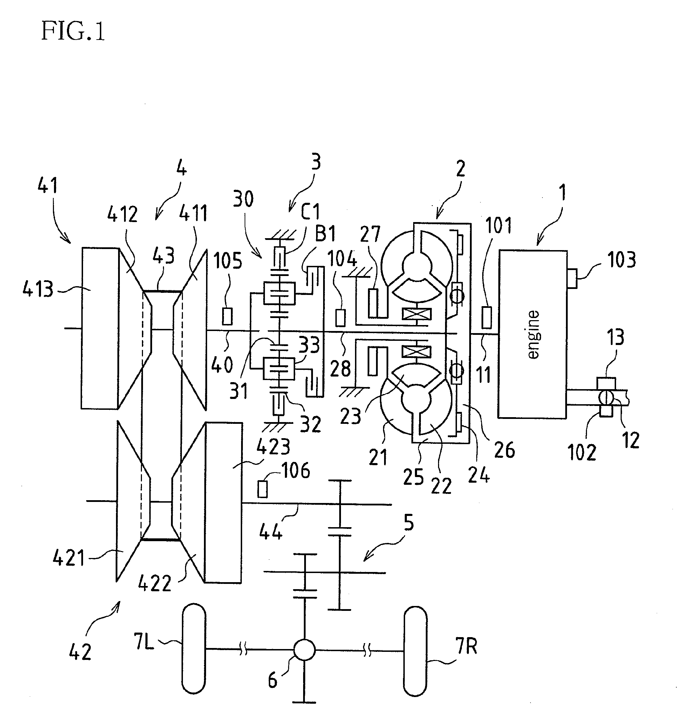

FIG. 1 is a schematic configuration view of a vehicle in which the present invention is applied.

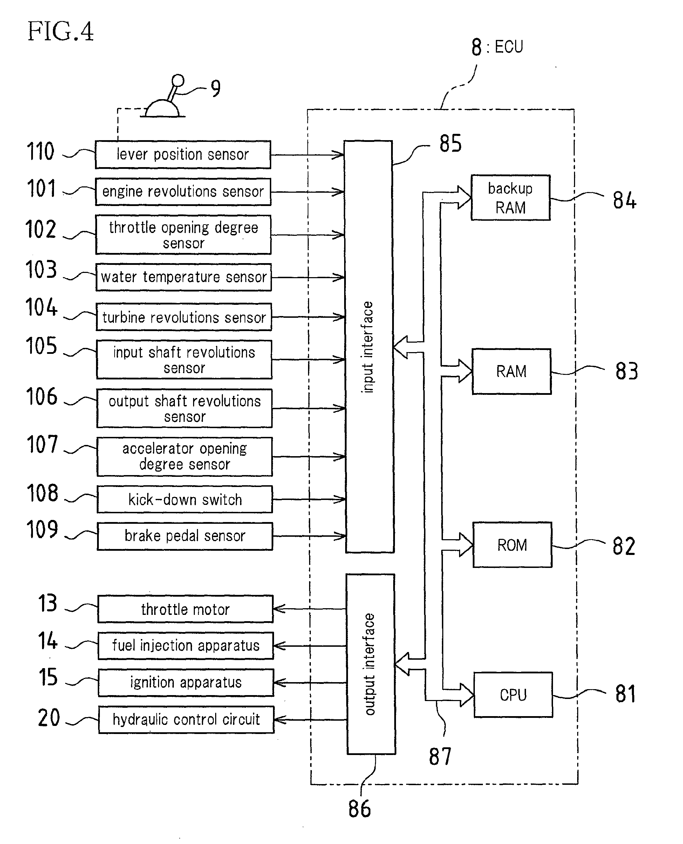

The vehicle in this example is a FF-type (front engine/front drive) vehicle, and is provided with an engine (internal combustion engine) 1 that is a traveling power source, a torque converter 2 that serves as a fluid power transmission apparatus, a forward/rearward switching apparatus 3, a belt-driven continuously variable transmission 4, a deceleration gear apparatus 5, a differential gear apparatus 6, and an electronic control unit (ECU) 8 (see FIG. 4). A vehicle control apparatus is realized with the ECU 8, a hydraulic control circuit 20 described later, an output shaft revolutions sensor 106, an accelerator opening degree sensor 107, a kick-down switch 108, and the like.

A crank shaft 11 that is an output shaft of the engine 1 is linked to the torque converter 2, and output of the engine 1 is transmitted from the torque converter 2 to the differential gear apparatus 6 via the forward/rearward switching apparatus 3, the belt-driven continuously variable transmission 4, and the deceleration gear apparatus 5, and then distributed to left and right drive wheels 7L and 7R.

The engine 1, the torque converter 2, the forward/rearward switching apparatus 3, the belt-driven continuously variable transmission 4, the hydraulic control circuit 20, and the ECU 8 will be described below.

[0036]   - Engine -

The engine 1 is, for example, a multi-cylinder gasoline engine. The amount of intake air that is sucked into the engine 1 is adjusted by an electronically controlled throttle valve 12. The throttle valve 12 is capable of electronically controlling the throttle opening degree independent of accelerator pedal operation by the driver, and that opening degree (throttle opening degree) is detected with a throttle opening degree sensor 102. Also, a coolant water temperature of the engine 1 is detected with a water temperature sensor 103.

The throttle opening degree of the throttle valve 12 is driven/controlled with the ECU 8. Specifically, the throttle opening degree of the throttle valve 12 is controlled such that an optimal intake air amount (target intake amount) is obtained according to the operational state of the engine 1 such as engine revolutions ne detected with an engine revolutions sensor 101, the amount of accelerator pedal depression (accelerator opening degree pap) by the driver, and the like. In more detail, the actual throttle opening degree of the throttle valve 12 is detected using the throttle opening degree sensor 102, and a throttle motor 13 of the throttle valve 12 is feedback-controlled such that the actual throttle opening degree matches the throttle opening degree at which the target intake air amount is obtained (target throttle opening degree).

[0038]   - Torque Converter -

The torque converter 2 is provided with an input-side pump impeller 21, an output-side turbine runner 22, a stator 23 that exhibits a torque amplification function, and the like, and performs power transmission via a fluid between the pump impeller 21 and the turbine runner 22. The pump impeller 21 is linked to the crank shaft 11 of the engine 1. The turbine runner 22 is linked to the forward/rearward switching apparatus 3 via a turbine shaft 28.

The torque converter 2 is provided with a lockup clutch 24 that directly links the input side and output side of the torque converter 2. The lockup clutch 24 completely engages, half engages (engagement in a slipping state), or releases, by controlling the pressure difference between the oil pressure in an engagement-side oil chamber 25 and the oil pressure in a release-side oil chamber 26.

By completely engaging the lockup clutch 24, the pump impeller 21 and the turbine runner 22 rotate as a single body. Also, by engaging the lockup clutch 24 in a predetermined slipping state (half engaged state), the turbine runner 22 rotates following the pump impeller 21 with a predetermined slippage amount during driving. On the other hand, by setting a negative lockup pressure difference, the lockup clutch 24 enters a disengaged state. Further, the torque converter 2 is provided with a mechanical oil pump (oil pressure production source) that is driven while linked to the pump impeller 21.

[0041]   - Forward/Rearward Switching Apparatus -

The forward/rearward switching apparatus 3 is provided with a double pinion planetary gear mechanism 30, a forward movement clutch (input clutch) C1, and a rearward movement brake B1.

A sun gear 31 of the planetary gear mechanism 30 is linked together with the turbine shaft 28 of the torque converter 2, and a carrier 33 is linked together with an input shaft 40 of the belt-driven continuously variable transmission 4. The carrier 33 and the sun gear 31 are selectively linked via the forward movement clutch C1, and a ring gear 32 is selectively fixed to a housing via the rearward movement brake B1.

The forward movement clutch C1 and the rearward movement brake B1 are hydraulic friction engaging elements that are engaged/released with a hydraulic control circuit 20 described later. Due to the forward movement clutch C1 being engaged and the rearward movement brake B1 being released, a state is established in which the forward/rearward switching apparatus 3 rotates as one body, and in the forward/rearward switching apparatus 3, a forward motive power transmission path is formed (realized).

In this state, driving force in the forward direction is transmitted to the belt-driven continuously variable transmission 4 side.

On the other hand, due to the rearward movement brake B1 being engaged and the forward movement clutch C1 being released, a rearward motive power transmission path is formed (realized) in the forward/rearward switching apparatus 3. In this state, the input shaft 40 rotates in a reverse direction relative to the turbine shaft 28, and this driving force in the rearward direction is transmitted to the belt-driven continuously variable transmission 4 side. When the forward movement clutch C1 and the rearward movement brake B1 are both released, the forward/rearward switching apparatus 3 is in neutral (a blocked state), in which motive power transmission is blocked.

[0045]   - Belt-driven Continuously Variable Transmission -

The belt-driven continuously variable transmission 4 includes an input-side primary pulley 41, an output-side secondary pulley 42, and a belt 43, which is made of metal and is wrapped around the primary pulley 41 and the secondary pulley 42.

The primary pulley 41 is a variable pulley whose effective diameter is variable, and is configured from a fixed sieve 411 that has been fixed to the input shaft 40, and a movable sieve 412 disposed on the input shaft 40 in a state in which the movable sieve 412 is slidable in only the axial direction. The secondary pulley 42 likewise is a variable pulley whose effective diameter is variable, and is configured from a fixed sieve 421 that has been fixed to the output shaft 44, and a movable sieve 422 disposed in the output shaft 44 in a state in which the movable sieve 422 is slidable in only the axial direction.

In the movable sieve 412 of the primary pulley 41, a hydraulic actuator 413 for changing the V channel width between the fixed sieve 411 and the movable sieve 412 is provided. Likewise, in the movable sieve 422 of the secondary pulley 42, a hydraulic actuator 423 for changing the V channel width between the fixed sieve 421 and the movable sieve 422 is disposed.

In the above belt-driven continuously variable transmission 4, by controlling the oil pressure of the hydraulic actuator 413 of the primary pulley 41, the V channel widths of the primary pulley 41 and the secondary pulley 42 change and thus the belt contact radius (effective diameter) of the belt 43 is changed, so a gear ratio gamma (gear ratio gamma = input shaft revolutions nin/output shaft revolutions nout) changes continuously. The oil pressure of the hydraulic actuator 423 of the secondary pulley 42 is controlled such that the belt 43 is clamped with a predetermined clamping force at which belt slippage does not occur. These controls are executed with the ECU 8 and the hydraulic control circuit 20 (see FIG. 4).

[0049]    - Hydraulic Control Circuit -

The hydraulic control circuit 20 is provided with a linear solenoid valve, an ON/OFF solenoid valve, and the like, and by controlling excitement/non-excitement of these solenoid valves to switch hydraulic circuits, gear shift control of the belt-driven continuously variable transmission 4 and control of engagement/release of the lockup clutch 24 are performed. Excitement/non-excitement of the linear solenoid valve, the ON/OFF solenoid valve, and the like of the hydraulic control circuit 20 is controlled with solenoid control signals (instructed oil pressure signals) from the ECU 8.

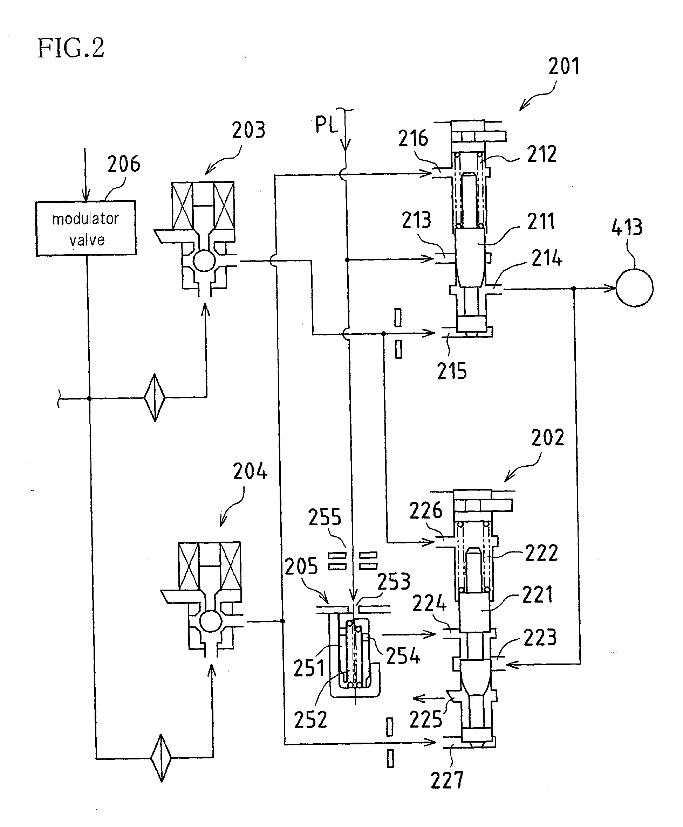

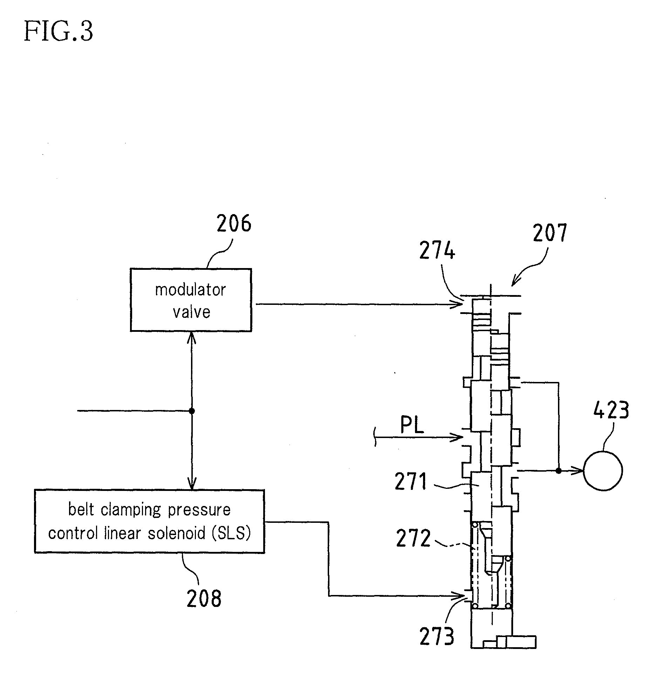

Next, with reference to FIGS. 2 and 3, is a description of, in the hydraulic control circuit 20, the hydraulic control circuit of the hydraulic actuator 413 of the primary pulley 41 of the belt-driven continuously variable transmission 4, and the hydraulic control circuit that controls the clamping pressure of the belt 43 (hydraulic control circuit of the hydraulic actuator 423 of the secondary pulley 42).

First is a description of the hydraulic control circuit of the hydraulic actuator 413 of the primary pulley 41. As shown in FIG. 2, in the hydraulic actuator 413 of the primary pulley 41, a first flow amount control valve 201 that supplies a line pressure PL and a second flow amount control valve 202 that is connected to a drain are connected.

The first flow amount control valve 201 is a valve for executing an upshift, and is configured such that a channel between an input port 213 where the line pressure PL is supplied and an output port 214 that is in communication with the hydraulic actuator 413 of the primary pulley 41 are opened/closed with a spool 211. A spring (compression coil spring) 212 is disposed at one end of the spool 211, and at the opposite end from the spring 212, sandwiching the spool 211, a first signal pressure port 215 for applying a signal pressure is formed. Also, at the end where the spring 212 is disposed, a second signal pressure port 216 for applying a signal pressure is formed.

A gear shift control duty solenoid 203 where output pressure increases according to duty is connected to the first signal pressure port 215, and the signal pressure that the gear shift control duty solenoid 203 outputs is applied to the first signal pressure port 215. Also, a gear shift control duty solenoid 204 where output pressure increases according to duty is connected to the second signal pressure port 216, and the signal pressure that the gear shift control duty solenoid 204 outputs is applied to the second signal pressure port 216. With control of the gear shift control duty solenoids 203 and 204, by increasing the oil pressure that is applied to the first signal pressure port 215, working oil is supplied to the hydraulic actuator 413 of the primary pulley 41 from the output port 214, and thus the groove width of the primary pulley 41 is narrowed to reduce the gear ratio (upshift). Also, the gear shift speed increases due to increasing the supplied fluid amount of working oil at that time.

The second flow amount control valve 202 is a valve for executing a downshift, and is configured such that a first port 223 in communication with the hydraulic actuator 413 of the primary pulley 41 is selectively put in communication with a second port 224 where oil pressure that has been adjusted using the line pressure PL as a source pressure is supplied, or a drain port 225, using a spool 221.

A spring (compression coil spring) 222 is disposed at one end of the spool 221, and at that end, a first signal pressure port 226 for applying a signal pressure is formed. At the opposite end from the spring 222, sandwiching the spool 221, a second signal pressure port 227 for applying a signal pressure is formed.

The gear shift control duty solenoid 203 is connected to the first signal pressure port 226, and the signal pressure that the gear shift control duty solenoid 203 outputs is applied to the first signal pressure port 226. The gear shift control duty solenoid 204 is connected to the second signal pressure port 227, and the signal pressure that the gear shift control duty solenoid 204 outputs is applied to the second signal pressure port 227. With control of the gear shift control duty solenoids 203 and 204, by increasing the oil pressure that is applied to the second signal pressure port 227 to put the first port 223 in communication with the drain port 225, working oil from the hydraulic actuator 413 of the primary pulley 41 is discharged, and thus the groove width of the primary pulley 41 is widened to increase the gear ratio (downshift). Also, the gear shift speed increases due to increasing the discharged fluid amount of working oil at that time.

Further, a regulator 205 is connected to the second port 224 of the second flow amount control valve 202. The regulator 205 is a valve in which an input port 253 where line pressure PL is supplied is formed on the front face side of a piston 251, and that has an output port 254 in communication with the front face side and the back face side of the piston 251, the output port 254 also being in communication with the second port 224 of the second flow amount control valve 202. The piston 251 is pushed to the input port 253 side by a spring (compression coil spring) 252. Line pressure PL is supplied to the input port 253 of the regulator 205 via a double orifice 255 with a small opening area. In the regulator 205 of this example, oil pressure with a pressure in which elastic force of the spring 252 is reduced from the line pressure PL is produced at the output port 254, i.e., at the second port 224 of the second flow amount control valve 202.

Oil pressure that has been adjusted to a fixed pressure with a modulator valve 206 is supplied to the gear shift control duty solenoid 203 and the gear shift control duty solenoid 204.

Next is a description of a hydraulic control circuit that controls the clamping force of the belt 43, with reference to FIG. 3.

The oil pressure of the hydraulic actuator 423 of the secondary pulley 42 is controlled with a clamping force control valve 207 such that the belt 43 does not slip. The clamping force control valve 207 is provided with a spool 271 that is movable in the axial direction and a spring (compression coil spring) 272 that biases the spool 271 in one direction.

A belt clamping pressure control linear solenoid 208 is connected to a first signal pressure port 273 of the clamping force control valve 207. A modulator valve 206 is connected to a second signal pressure port 274 of the clamping force control valve 207.

The clamping pressure control valve 207 adjusts the line pressure PL introduced to the clamping pressure control valve 207 with the balance of the output oil pressure of the belt clamping pressure control linear solenoid 208 controlled by the ECU 8, the oil pressure that has been adjusted to the fixed pressure by the modulator valve 206, and the biasing force of the spring 272, and the adjusted line pressure is supplied to a hydraulic cylinder 423 of the secondary pulley 42.

In the hydraulic control circuit in FIG. 3, from a state in which a predetermined oil pressure is being supplied to the hydraulic actuator 423 of the secondary pulley 42, when the oil pressure from the modulator valve 206 decreases, or the oil pressure from the belt clamping pressure control linear solenoid 208 increases, the spool 271 moves to the upper side in FIG. 3. In this case, the oil pressure supplied to the hydraulic actuator 423 of the secondary pulley 42 increases, so the belt clamping pressure increases.

On the other hand, from a state in which a predetermined oil pressure is being supplied to the hydraulic actuator 423 of the secondary pulley 42, when the oil pressure from the modulator valve 206 increases, or the oil pressure from the belt clamping pressure control linear solenoid 208 decreases, the spool 271 moves to the lower side in FIG. 3. In this case, the oil pressure supplied to the hydraulic cylinder of the secondary pulley 42 decreases, so the belt clamping pressure decreases.

Note that as shown in FIGS. 2 and 3, oil pressure (modulator pressure PM) from the same modulator valve 206 is supplied to the gear shift control duty solenoid 203, the gear shift control duty solenoid 204, and the clamping pressure control valve 207.

**[0066]** - ECU -
As shown in FIG. 4, the ECU 8 is provided with a CPU 81, a ROM 82, a RAM 83, a backup RAM 84, and the like.

Various control programs, maps referred to when executing the various control programs, and the like are stored in the ROM 82. The CPU 81 executes computational processing based on the various control programs and maps stored in the ROM 82. The RAM 83 is a memory that temporarily stores the results of computational processing with the CPU 81, data input from various sensors, and the like, and the backup RAM 84 is a nonvolatile memory that stores data from the RAM 83 that should be saved when the engine 1 is stopped.

Via a bus 87, the CPU 81, the ROM 82, the RAM 83, and the backup RAM 84 are connected to each other, and also connected to an input interface 85 and an output interface 86.

Connected to the input interface 85 of the ECU 8 are, for example, an engine revolutions sensor 101, a throttle opening degree sensor 102, a water temperature sensor 103, a turbine revolutions sensor 104, an input shaft revolutions sensor 105, an output shaft revolutions sensor 106, an accelerator opening degree sensor 107, a kick-down switch 108 that detects that the accelerator pedal has been depressed to a kick-down position, a brake pedal sensor 109, and a lever position sensor 110 that detects the lever position (operation position) of a shift lever 9. Output signals of each sensor are supplied to the ECU 8, i.e., for example, signals that express the revolutions ne of the engine 1 (number of engine revolutions), throttle opening degree θth of the throttle valve 12, coolant water temperature tw of the engine 1, revolutions of the turbine shaft 28 (turbine revolutions nt), revolutions of the input shaft 40 (input shaft revolutions nin), revolutions of the output shaft 44 (output shaft revolutions nout), operation amount of the accelerator pedal (accelerator opening degree pap), ON/OFF of the kick-down switch 108, presence/absence of operation of a foot brake that is an ordinary brake (brake ON/OFF), and lever position of the shift lever 9 (operation position).

The throttle motor 13, a fuel injection apparatus 14, an ignition apparatus 15, the hydraulic control circuit 20, and the like are connected to the output interface 86 of the ECU 8.

Here, of the signals supplied to the ECU 8, the turbine revolutions nt match the input shaft revolutions nin during forward travel, in which the forward movement clutch C1 of the forward/rearward switching apparatus 3 is engaged, and the revolutions (output shaft revolutions nout) of the output shaft 44 of the belt-driven continuously variable transmission 4 correspond to vehicle speed spd. Also, the accelerator opening degree pap expresses the amount of output demanded by the driver.

The shift lever 9 is selectively operated to various positions, such as a parking position "P" for parking the vehicle, a reverse position "R" for rearward travel, a neutral position "N" where power transmission is blocked, a drive position "D" for forward travel, and a manual position "M" where the gear ratio gamma of the belt-driven continuously variable transmission 4 during forward travel can be increased or decreased with manual operation.

The manual position "M", for example, is provided with a downshift position and an upshift position for increasing or decreasing the gear ratio gamma, or alternatively is provided with a plurality of range positions in which a plurality of gear shift ranges can be selected that have different upper limit (side where gear ratio gamma is small) gear shift ranges.

The lever position sensor 110, for example, is provided with a plurality of ON/OFF switches or the like that detect that the shift lever 9 has been operated to the parking position "P", the reverse position "R", the neutral position "N", the drive position "D", the manual position "M", the upshift position, the downshift position, or a range position. In order to change the gear ratio gamma with a manual operation, it is also possible to provide, separate from the shift lever 9, a downshift switch and an upshift switch, or a lever or the like, on a steering wheel or the like.

The ECU 8, based on the output signals of the various sensors above, executes output control of the engine 1, gear shift control of the belt-driven continuously variable transmission 4, belt clamping pressure control, control of engagement/release of the lockup clutch 24, and the like. Furthermore, the ECU 8 executes linear shift control described later.

Output control of the engine 1 is performed with the throttle motor 13, the fuel injection apparatus 14, the ignition apparatus 15, the ECU 8, and the like, and gear shift control of the belt-driven continuously variable transmission 4, belt clamping pressure control, and control of engagement/release of the lockup clutch 24 are each performed with the hydraulic control circuit 20. The throttle motor 13, the fuel injection apparatus 14, the ignition apparatus 15, and the hydraulic control circuit 20 are controlled with the ECU 8.

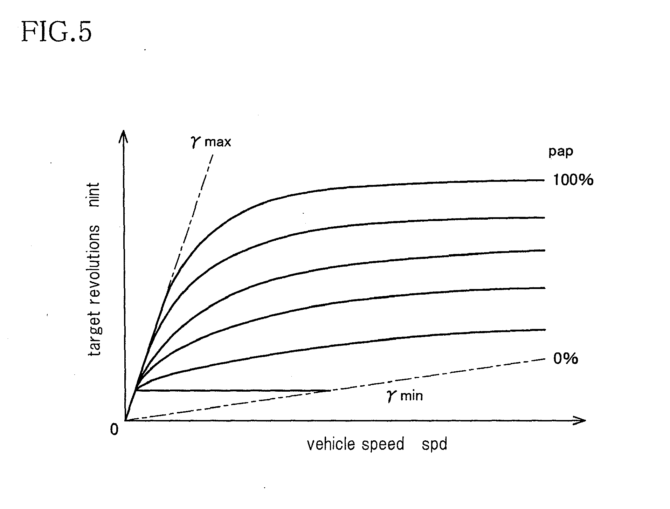

In gear shift control of the belt-driven continuously variable transmission 4, for example as shown in FIG. 5, the input side target revolutions nint are calculated from a map that has been set in advance using the accelerator opening degree pap that expresses the amount of output demanded by the driver and the vehicle speed spd as parameters, and such that the actual input shaft revolutions nin match the target revolutions nint, gear shift control of the belt-driven continuously variable transmission 4 is performed according to their deviation, i.e., the gear shift control pressure Pbelt is controlled with supply/discharge of working oil for the hydraulic actuator 413 of the primary pulley 41, and thus the gear ratio gamma is continuously changed.

The map shown in FIG. 5 corresponds to gear shift conditions, and the target revolutions nint are set such that the gear ratio gamma increases as the vehicle speed spd is less and the accelerator opening degree pap increases. Also, the vehicle speed spd corresponds to the output shaft revolutions nout, so the target revolutions nint, being the target value of the input shaft revolutions nin, correspond to the target gear ratio, and are set within the range of a minimum gear ratio gamma min and a maximum gear ratio gamma max of the belt-driven continuously variable transmission 4.

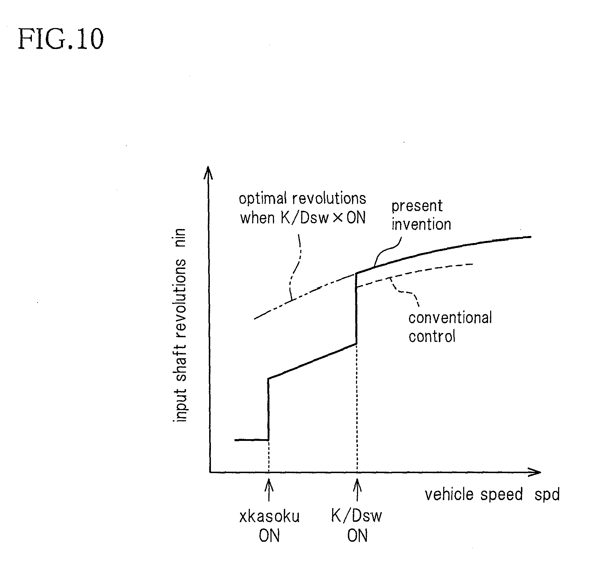

[0079] - Linear Shift Control -
First, with conventional linear shift control, as described above, kick-down operation during acceleration is not considered, so even if the kick-down switch 108 is set to ON during linear shift control, the preceding linear shift control continues. Therefore, for example, as indicated by the broken line in FIG. 10, there may be instances when the attained revolutions when the kick-down switch is ON (K/Dsw-ON) do not reach the optimal revolutions, so acceleration performance during kick-down operation is not obtained. Also, there may be instances in which the attained revolutions exceed the optimal revolutions when there is a large amount of increase in the target revolutions at the point in time that the kick-down switch is set to ON. In this case, in a range of low vehicle speed or the like, the number of revolutions may become too high, so that vibration or noise occurs.

In consideration of such points, this example is characterized in that when the kick-down switch has been set to ON during linear shift control, information that the kick-down switch is ON is reflected in acceleration target revolutions ninline, and thus drivability is improved. An example of that linear shift control is described below.

In the linear shift control of this example, the acceleration target revolutions ninline are determined based on the following formula (1), using base target revolutions ninline0, an accelerator opening degree correction amount nlpaph, and a vehicle speed change correction amount (revolutions correction amount for vehicle speed change) nlspdh.

$$\text{ninline} = \text{ninline0} + \text{nlpaph} + \text{nlspdh} \qquad (1)$$

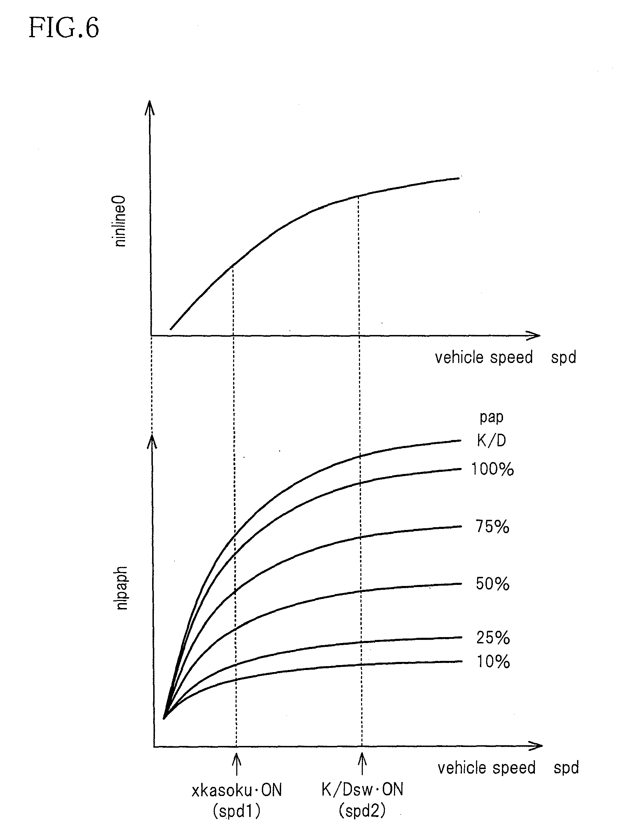

The base target revolutions ninline0 and the accelerator opening degree correction amount nlpaph in formula (1) are calculated using the map shown in FIG. 6.

The map shown in FIG. 6 is for obtaining the base target revolutions ninline0 and the accelerator opening degree correction amount nlpaph, starting from a vehicle speed spd1 when acceleration is judged (when a acceleration judgment flag xkasoku = ON, described below), and a vehicle speed spd2 when the kick-down switch is ON (K/Dsw·ON).

In the map in FIG. 6, vehicle speed spd (or vehicle speed spd and accelerator opening degree pap) is used as a parameter, and values obtained by testing, calculation, and the like in consideration of optimal revolutions during acceleration and optimal revolutions (see FIG. 10) when the kick-down switch is ON (K/Dsw·ON) are converted to a map. This map is stored in the ROM 82 of the ECU 8.

In the map in FIG. 6, the base target revolutions ninline0 and the accelerator opening degree correction amount nlpaph are set so as to increase as the vehicle speed spd increases. Also, in the map in FIG. 6, the base target revolutions ninline0 is a value determined uniquely for the vehicle speed spd, and is a correction amount that changes only in a case where the vehicle speed spd serving as the start point has changed (only when the start point has been re-read). On the other hand, the accelerator opening degree correction amount nlpaph is a correction amount that changes according to the accelerator opening degree pap even when the vehicle speed spd serving as the start point is the same (when the start point has not been re-read).

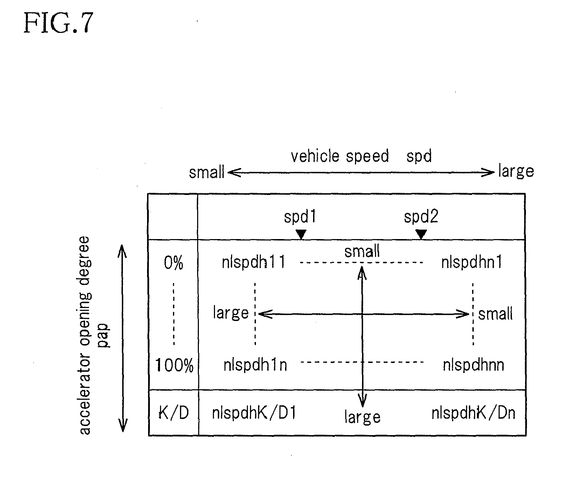

The vehicle speed change correction amount nlspdh in above formula (1) is calculated using the map shown in FIG. 7.

The map shown in FIG. 7 is for obtaining the vehicle speed change correction amount nlspdh, starting from the vehicle speed spd1 when acceleration is judged (when xkasoku = ON, described below), and the vehicle speed spd2 when the kick-down switch is ON (K/Dsw·ON).

In the map in FIG. 7, vehicle speed spd and accelerator opening degree pap are used as parameters, and values obtained by testing, calculation, and the like in consideration of a rising slope of vehicle speed spd after acceleration is judged, and a rising slope of vehicle speed spd after the kick-down switch is ON are converted to a map. This map is stored in the ROM 82 of the ECU 8.

In the map in FIG. 7, the value of the vehicle speed change correction amount nlspdh is set smaller as the vehicle speed spd increases, and is set larger as the accelerator opening degree pap increases. Also, the vehicle speed change correction amount nlspdh when the accelerator opening degree pap is a kick-down opening degree [K/D] is set to a larger value than for accelerator opening degree pap = 100% at the same vehicle spd.

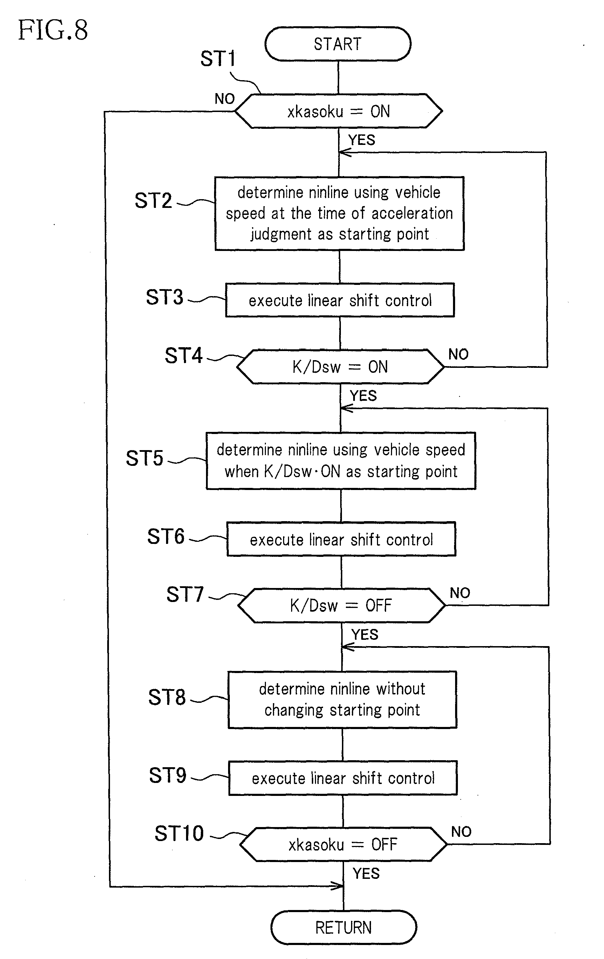

Next is a description of a specific example of this example of linear shift control, with reference to the flowchart shown in FIG. 8. The control routine in FIG. 8 is executed by the ECU 8.

First, in Step ST1, a judgment is made of whether or not the acceleration judgment flag xkasoku is ON. This acceleration judgment flag xkasoku is set by separate processing, and when the accelerator opening degree pap calculated from an output signal of the accelerator opening degree sensor 107 is larger than a judgment value Thpap that has been set in advance, the acceleration judgment flag xkasoku is set to ON, and when no greater than the judgment value Thpap, the acceleration judgment flag xkasoku is set to OFF. The judgment value Thpap, for example, is a value for judging whether or not an acceleration operation has been positively performed, by comparing to steady movement or ordinary movement in a level path, and a value obtained through experience in advance by testing, calculation and the like is set as the judgment value Thpap.

When the result of the judgment in above Step ST1 is affirmative (xkasoku=ON), the routine advances to Step ST2. When the result of the judgment in Step ST1 is negative, the routine temporarily ends.

In Step ST2, the acceleration target revolutions ninline are determined using the vehicle speed spd1 when acceleration is judged (xkasoku = ON) as a starting point.

Specifically, with reference to the map in FIG. 6, the base target revolutions ninline0 and the accelerator opening degree correction amount nlpaph are read out with the vehicle speed spd1 when acceleration was judged as a starting point. Further, with reference to the map in FIG. 7, with the vehicle speed spd1 when acceleration was judged as a starting point, the vehicle speed change correction amount nlspdh is read out, and using the base target revolutions ninline0, the accelerator opening degree correction amount nlpaph, and the vehicle speed change correction amount nlspdh, the acceleration target revolutions ninline are determined from above formula (1).

Of the correction items of the acceleration target revolutions ninline, the vehicle speed change correction amount nlspdh is a correction value that increases in proportion to an increase in vehicle speed, and accordingly, the acceleration target revolutions ninline increase along with an increase in the vehicle speed spd.

Next, in Step ST3, linear shift control is executed based on the acceleration target revolutions ninline determined in Step ST2. Specifically, feedback control of the input shaft revolutions nin is performed such that the deviation between the acceleration target revolutions ninline determined in Step ST2 and the input shaft revolutions nin calculated from the output signal of the input shaft revolutions sensor 105 falls within a predetermined range.

In the above linear shift control after acceleration judgment, a judgment is made of whether or not the kick-down switch 108 is ON (K/Dsw = ON)(Step ST4), and when the result of that judgment is negative (K/Dsw = OFF), the routine returns to Step ST2 and linear shift control (linear shift control during ordinary acceleration) is continued. When the result of the judgment in Step ST4 is affirmative (K/Dsw = ON), the routine advances to Step ST5.

In Step ST5, the starting point where the acceleration target revolutions ninline are determined is re-read, and the acceleration target revolutions ninline are determined using the vehicle speed when kick-down switch was set to ON as the starting point.

Specifically, in the map in FIG. 6, the starting point where the base target revolutions ninline0 and the accelerator opening degree correction amount nlpaph are obtained is re-read from the vehicle speed spd1 when acceleration was judged to the vehicle speed spd2 when the kick-down switch is ON (K/Dsw-ON), and the base target revolutions ninline0 and the accelerator opening degree correction amount nlpaph when the kick-down switch is ON are read out. Likewise, in the map shown in FIG. 7, the starting point where the vehicle speed change correction amount nlspdh is obtained is re-read from the vehicle speed spd1 when acceleration was judged to the vehicle speed spd2 when the kick-down switch is ON (K/Dsw-ON), and the vehicle speed change correction amount nlspdh when the kick-down switch is ON are read out.

Then, using the base target revolutions ninline0, accelerator opening degree correction amount nlpaph, and vehicle speed change correction amount nlspdh that have been read out, from above formula (1), the acceleration target revolutions ninline when the kick-down switch is ON are determined. Note that in this case as well, of the correction items of the acceleration target revolutions ninline, the vehicle speed change correction amount nlspdh increases in proportion to an increase in vehicle speed, and the acceleration target revolutions ninline increase along with an increase in the vehicle speed spd.

Next, in Step ST6, linear shift control is executed with the same processing as in above Step ST3, based on the acceleration target revolutions ninline determined in Step ST5. This sort of linear shift control when the kick-down switch is ON is continued until the kick-down switch 108 is OFF (until the result of judgment in Step ST7 is affirmative).

When the result of the judgment in Step ST7 is affirmative (K/Dsw = OFF), the routine advances to Step ST8. In Step ST8, without changing the starting point where the acceleration target revolutions ninline are determined, the acceleration target revolutions ninline are determined using the vehicle speed when kick-down switch was set to ON as the starting point.

Specifically, in the maps shown in FIGS. 6 and 7, with the vehicle speed spd2 when the kick-down switch is ON (K/Dsw·ON) as the starting point, the base target revolutions ninline0, accelerator opening degree correction amount nlpaph, and vehicle speed change correction amount nlspdh are read out, the acceleration target revolutions ninline after the kick-down switch is OFF are determined, and based on the acceleration target revolutions ninline determined in Step ST8, linear shift control is executed with the same processing as in Step ST3 (Step ST9).

This sort of linear shift control after the kick-down switch is OFF is continued until the acceleration judgment flag xkasoku is OFF (until the result of judgment in Step ST10 is affirmative), and when the result of judgment in Step ST10 is affirmative, this routine is temporarily ended.

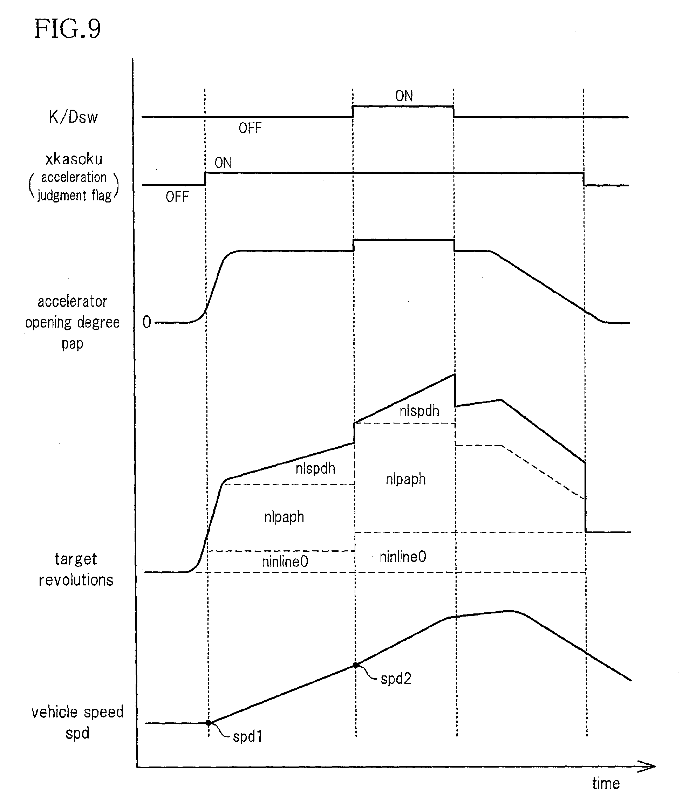

The above linear shift control will be specifically described with reference to the timing chart in FIG. 9.

First, when the accelerator pedal is depressed, so that the accelerator opening degree pap becomes at least the above-described judgment value Thpap, and the acceleration judgment flag is ON (xkasoku = ON), the base target revolutions ninline0, accelerator opening degree correction amount nlpaph, and vehicle speed change correction amount nlspdh are read out with the vehicle speed spd1 when that acceleration judgment flag is ON as the starting point, with reference to FIGS. 6 and 7, and using the base target revolutions ninline0, accelerator opening degree correction amount nlpaph, and vehicle speed change correction amount nlspdh, the acceleration target revolutions ninline are determined from above formula (1). However, the vehicle speed change correction amount nlspdh is a correction value that increases in proportion to an increase in vehicle speed, so as shown in FIG. 9, in linear shift control during normal acceleration, the acceleration target revolutions ninline increase along a predetermined slope.

After starting such linear shift control during normal acceleration, if a kick-down operation is performed in which the driver depresses the accelerator pedal to nearly full throttle, the kick-down switch 108 is set to ON (K/Dsw·ON).

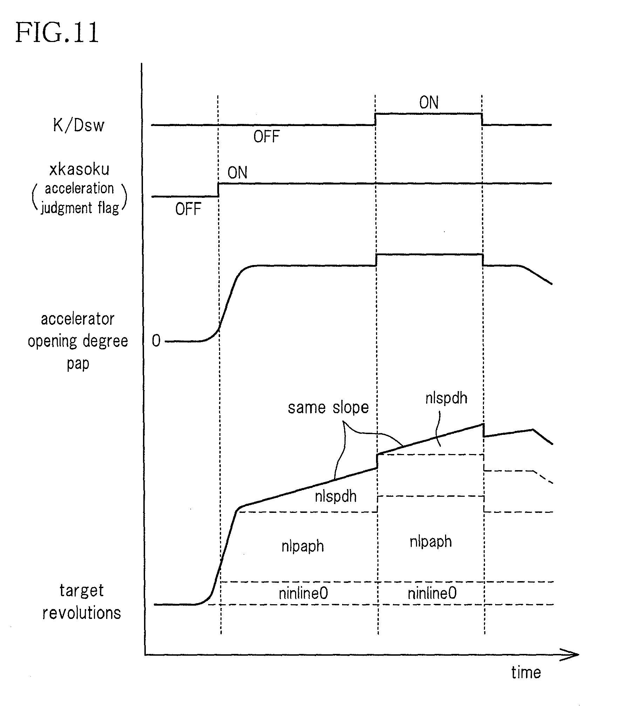

Here, with conventional linear shift control, because ON/OFF of the kick-down switch 108 is not considered, even if the kick-down switch 108 is set to ON, the acceleration target revolutions ninline are determined with the vehicle speed spd1 when acceleration was judged used as the starting point. Therefore, as shown in FIG. 11, even if the kick-down switch 108 is set to ON, the value of the base target revolutions ninline0 prior to that switching ON is continued. Also, with respect to the accelerator opening degree correction amount nlpaph, this only increases the opening degree such that the accelerator opening degree pap changes from 100% to K/D.

Accordingly, with conventional linear shift control, as shown in FIG. 10, there may be instances in which the attained revolutions when the kick-down switch 108 is ON (K/Dsw·ON) do not reach the optimal revolutions, so that acceleration performance is not obtained during a kick-down operation.

Furthermore, with the conventional linear shift control, as shown in FIG. 11, the slope of the vehicle speed change correction amount nlspdh after the kick-down switch is ON continues with the same slope as during normal acceleration, so there may be instances when it is not possible to change the acceleration target revolutions ninline at a slope corresponding to the change (increase) in the optimal revolutions when the kick-down switch is ON.

On the other hand, with the linear shift control of this example, when the kick-down switch 108 is ON, the starting point where the acceleration target revolutions ninline are determined is re-read, and with the vehicle speed when the kick-down switch is ON as the starting point, the base target revolutions ninline0, accelerator opening degree correction amount nlpaph, and vehicle speed change correction amount nlspdh are read out to determine the acceleration target revolutions ninline, so as shown in FIG. 10, so it is possible to always control the attained revolutions when the kick-down switch is set to ON to an optimal number of revolutions (maximum output revolutions), and thus good acceleration performance can be obtained during a kick-down operation.

Furthermore, when the kick-down switch is ON, the vehicle speed change correction amount nlspdh up to then is cancelled, and the vehicle speed change correction amount nlspdh is independently set using the vehicle speed spd2 when the kick-down switch is ON as the starting point. Therefore, after the attained revolutions when the kick-down switch is ON have reached the optimal revolutions, the revolutions can be matched to the optimal revolutions, and thus it is possible to further improve drivability during a kick-down operation.

Also, with the linear shift control of this example, when the kick-down switch 108 has been set to OFF after being set to ON (K/Dsw·ON to K/Dsw·OFF), the starting point where the acceleration target revolutions ninline are determined is not changed, and the acceleration target revolutions ninline are determined using the vehicle speed spd2 when the kick-down switch is ON as the starting point, so it is possible to suppress a sudden change (sudden drop) in the revolutions when the kick-down switch is OFF, and thus it is possible to prevent a reduction in drivability when the kick-down switch is OFF.

[0114] - Other Embodiments -

In the above examples, the present invention was applied to gear shift control of a continuously variable transmission of a vehicle equipped with a gasoline engine, but the present invention is not limited to this application, and is also applicable to gear shift control of a continuously variable transmission of a vehicle equipped with another type of engine, such as a diesel engine. Also, the power source of the vehicle may be, other than an engine (internal combustion engine), an electric motor, or a hybrid power source provided with both an engine and an electric motor.

The present invention may be embodied in various other forms without departing from the gist or essential characteristics thereof. The embodiments disclosed in this application are to be considered in all respects as illustrative and not limiting. The scope of the invention is indicated by the appended claims rather than by the foregoing description, and all modifications or changes that come within the meaning and range of equivalency of the claims are intended to be embraced therein.

INDUSTRIAL APPLICABILITY

The present invention is not limited to FF-type (front engine/front drive) vehicles, and is also applicable to FR-type (front engine/rear drive) vehicles and four wheel drive vehicles.

This application claims priority on Japanese Patent Application No. 2007-276335 filed in Japan on October 24, 2007, the entire contents of which are herein incorporated by reference.

When acceleration has been judged from the amount of operation of an accelerator pedal, linear shift control is executed by determining acceleration target revolutions ninline using vehicle speed at the time of that acceleration judgment as a starting point (ST1 to ST3). After the acceleration judgment, when a kick-down switch is set to ON, the vehicle speed at which the acceleration target revolutions are determined is re-read, and linear shift control is executed by determining the acceleration target revolutions ninline using vehicle speed when the kick-down switch is ON as a starting point (ST4 to ST5). By re-reading the starting point where the acceleration target revolutions are determined when the kick-down switch is ON in this manner, it is possible to always control the attained revolutions when the kick-down switch is set to ON to an optimal number of revolutions (maximum output revolutions), and thus it is possible to improve drivability.

**Claims**

1. A vehicle control apparatus that is applied to a vehicle equipped with a continuously variable transmission, comprising an acceleration judging means that judges acceleration from the amount of operation of an accelerator pedal, and a linear shift control means that, when acceleration has been judged with the acceleration judging means, based on acceleration target revolutions that are greater than normal target revolutions used during normal operation of the accelerator pedal, controls the continuously variable transmission,
   **characterized in that** the vehicle control apparatus comprises a kick-down switch that detects that the accelerator pedal has been depressed to a kick-down position, and the linear shift control means determines the acceleration target revolutions based on running conditions of the vehicle when acceleration is judged, and executes linear shift control, and when the kick-down switch is set to ON, re-reads the conditions whereby the acceleration target revolutions are determined.

2. The vehicle control apparatus according to claim 1, **characterized in that** the linear shift control means executes linear shift control by determining the acceleration target revolutions using the vehicle speed when acceleration is judged as a starting point, and when the kick-down switch is set to ON, re-reads the starting point for determining the acceleration target revolutions, and executes linear shift control by determining the acceleration target revolutions using the vehicle speed when the kick-down switch was set to ON as a starting point.

3. The vehicle control apparatus according to claim 2, **characterized in that** the linear shift control means determines the acceleration target revolutions by obtaining base target revolutions and an accelerator opening degree correction amount using the vehicle speed when acceleration is judged as a starting point, and when the kick-down switch is set to ON, determines the acceleration target revolutions by obtaining the base target revolutions and the accelerator opening degree correction amount using the vehicle speed when the kick-down switch was set to ON as a starting point.

4. The vehicle control apparatus according to claim 3, **characterized in that** when a vehicle speed change correction amount is reflected in the acceleration target revolutions, the vehicle speed change correction amount is set using the vehicle speed when acceleration is judged as a starting point, and when the kick-down switch is set to ON, the vehicle speed change correction amount is set using the vehicle speed when the kick-down switch was set to ON as a starting point.

5. The vehicle control apparatus according to any one of claims 1 to 4, **characterized in that** when the kick-down switch has been set to OFF after being set to ON, the conditions when the kick-down switch was set to ON are maintained without renewing the conditions in which the acceleration target revolutions are determined.

6. The vehicle control apparatus according to claim 5, **characterized in that** when the kick-down switch has been set to ON, the acceleration target revolutions are determined using the vehicle speed when the kick-down switch was set to ON as a starting point, and when the kick-down switch has been set to OFF after being set to ON, the starting point for determining the acceleration target revolutions is maintained, so that the acceleration target revolutions are determined using the vehicle speed when the kick-down switch was set to ON as a starting point.

FIG.1

FIG.2

FIG.3

206

207

274

modulator
valve

423

PL

271

272

belt clamping pressure
control linear solenoid (SLS)

208

273

# FIG.4

8 : ECU

9

| 110 | lever position sensor |
| 101 | engine revolutions sensor |
| 102 | throttle opening degree sensor |
| 103 | water temperature sensor |
| 104 | turbine revolutions sensor |
| 105 | input shaft revolutions sensor |
| 106 | output shaft revolutions sensor |
| 107 | accelerator opening degree sensor |
| 108 | kick-down switch |
| 109 | brake pedal sensor |

85 — input interface

84 — backup RAM

83 — RAM

82 — ROM

| 13 | throttle motor |
| 14 | fuel injection apparatus |
| 15 | ignition apparatus |
| 20 | hydraulic control circuit |

output interface

81 — CPU

87

86

FIG.5

FIG.6

FIG.7

## FIG.8

```
                    ┌─────────────┐
                    │    START    │
                    └──────┬──────┘
                           │
      NO    ┌──────────────┴──────────────┐
ST1 ◄───────│       xkasoku = ON          │
      │     └──────────────┬──────────────┘
      │                    │ YES
      │                    ▼ ◄──────────────────┐
      │     ┌─────────────────────────────┐     │
      │     │  determine ninline using     │     │
ST2   │     │  vehicle speed at the time   │     │
      │     │  of acceleration judgment    │     │
      │     │  as starting point           │     │
      │     └──────────────┬──────────────┘     │
      │                    │                     │
      │     ┌─────────────────────────────┐     │
ST3   │     │   execute linear shift control│     │
      │     └──────────────┬──────────────┘     │
      │                    │                     │
      │     ┌──────────────┴──────────┐  NO      │
ST4   │     │      K/Dsw = ON         │──────────┘
      │     └──────────────┬──────────┘
      │                    │ YES
      │                    ▼ ◄──────────────────┐
      │     ┌─────────────────────────────┐     │
ST5   │     │  determine ninline using     │     │
      │     │  vehicle speed when          │     │
      │     │  K/Dsw·ON as starting point  │     │
      │     └──────────────┬──────────────┘     │
      │                    │                     │
ST6   │     ┌─────────────────────────────┐     │
      │     │   execute linear shift control│     │
      │     └──────────────┬──────────────┘     │
      │                    │                     │
ST7   │     ┌──────────────┴──────────┐  NO      │
      │     │      K/Dsw = OFF        │──────────┘
      │     └──────────────┬──────────┘
      │                    │ YES
      │                    ▼ ◄──────────────────┐
ST8   │     ┌─────────────────────────────┐     │
      │     │  determine ninline without   │     │
      │     │  changing starting point     │     │
      │     └──────────────┬──────────────┘     │
      │                    │                     │
ST9   │     ┌─────────────────────────────┐     │
      │     │   execute linear shift control│     │
      │     └──────────────┬──────────────┘     │
      │                    │                     │
ST10  │     ┌──────────────┴──────────┐  NO      │
      │     │     xkasoku = OFF       │──────────┘
      │     └──────────────┬──────────┘
      │                    │ YES
      └────────────────────┤
                           ▼
                    ┌─────────────┐
                    │   RETURN    │
                    └─────────────┘
```

# FIG.9

FIG.10

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006051842 A
- JP 2005163959 A
- JP 2007276335 A